# EUROPÄISCHE PATENTSCHRIFT

(11) **EP 2 670 629 B1**
(45) Veröffentlichungstag und Bekanntmachung des Hinweises auf die Patenterteilung: **29.06.2016**
(21) Anmeldenummer: 12702221.8
(22) Anmeldetag: 30.01.2012
(51) Int. Cl.: B60R 11/02, G06F 3/01, F16M 13/00, G06F 1/16, H04M 1/04

(54) **BEDIENEINRICHTUNG**
OPERATOR CONTROL DEVICE
DISPOSITIF DE COMMANDE

(30) Priorität: 31.01.2011 DE 102011009840
(43) Veröffentlichungstag der Anmeldung: 11.12.2013
(73) Patentinhaber: Continental Automotive GmbH, 30165 Hannover (DE)
(72) Erfinder: BRÜNINGHAUS, Andreas, 51674 Wiehl (DE); KERN, Thorsten Alexander, 64665 Alsbach (DE); KUDASCHOV, Vitali, 61184 Karben (DE)
(86) Internationale Anmeldenummer: PCT/EP2012/051408
(87) Internationale Veröffentlichungsnummer: WO 2012/104235

(56) Entgegenhaltungen:
- EP-A2- 1 764 674
- WO-A2-2008/030594
- DE-A1-102010 007 486
- US-A1- 2004 075 676
- US-A1- 2009 051 509
- US-A1- 2009 166 098
- US-A1- 2009 292 851

## Beschreibung

Die Erfindung bezieht sich auf eine Bedieneinrichtung für eine Bordelektronik eines Kraftfahrzeugs, mit einer Bedieneinheit, die in einer Aufnahme einer im Innenraum des Kraftfahrzeugs befindlichen Dockingstation anordnenbar ist, mit einer Schnittstelle zwischen der Bedieneinheit und der Dockingstation zum Datenaustausch von Informationen, wobei die Bedieneinheit ein mehrere manuell betätigbare Bedienelemente aufweisendes Bedienfeld besitzt.

Bei derartigen Bedieneinrichtungen soll auch eine Bedienung der Bedienelemente während des Führens des Kraftfahrzeugs möglich sein.

Die Ergonomie der Bedienung der Bedieneinheit, insbesondere eines PDA oder Smartphones bedarf einer bewussten visuellen Konzentration auf das Bedienfeld und ggf. der darauf dargestellten Inhalte.

Eine solche Konzentration auf das Bedienfeld führt aber zu einem gefährlichen Ablenken von dem Fahrgeschehen.

Aus EP 1 764 674 A2 ist ein Kraftfahrzeug mit einer eine Eingabevorrichtungsschnittstelle aufweisenden Eingabevorrichtung bekannt, wobei das Kraftfahrzeug eine Haltevorrichtung zur lösbaren Befestigung der Eingabevorrichtung und eine zu der Eingabevorrichtungsschnittstelle korrespondierende Kraftfahrzeugschnittstelle umfasst. Die Eingabevorrichtung kann ein Display und einen mit diesem verbundenen Touchscreen zur Eingabe von Befehlen durch Berühren einer Bedienfläche des Touchscreens aufweisen.

Aufgabe der Erfindung ist es daher eine Bedienanleitung der eingangs genannten Art zu schaffen, die ohne wesentliche Ablenkung vom Fahrgeschehen von einem Fahrer eines Kraftfahrzeugs bedienbar ist.

Diese Aufgabe wird durch eine Bedieneinrichtung gemäß Anspruch 1 gelöst.

Durch diese Ausbildung können die Bedienelemente des Bedienfeldes von dem Fahrer des Kraftfahrzeugs ohne wesentliche Ablenkung vom Fahrgeschehen bedient werden, indem er haptisch eine kontrollierte Bewegung und Handnavigation auf dem Bedienfeld durchführen kann, ohne seinen Blick darauf zu richten.

Damit kann die Bedieneinheit problemlos im direkten Zugriffsbereich des Fahrers angeordnet sein.

Die Bedieneinheit kann ein PDA (Personal Digital Assistant) oder ein Smartphone sein, wobei durch die Betätigung der Bedienelemente ein Datenaustausch von Informationen mit der Bordelektronik eines Kraftfahrzeugs zur Steuerung von Kraftfahrzeugfunktionen erfolgt.

Es ist aber auch möglich, dass die Bedieneinheit ein Mobiltelefon oder iphone ist, bei dessen Betätigung der Bedienelemente eine haptische Rückmeldung erfolgt.

Die Schnittstelle kann einen mechanischen Kontakt, aber auch eine drahtlose Datenverbindung mittels Bluetooth oder Infrarot umfassen.

Ist die Bedieneinheit in mechanisch steifer Verbindung mit der Aufnahme in der Aufnahme anordnenbar, erfolgt eine besonders gute Übertragung und Erfassbarkeit des durch den Aktor oder die Aktoren alternierend auf die Aufnahme einwirkenden Rhythmus.

Die Aufnahme kann mit der darin aufgenommenen Bedieneinheit in dem alternierenden Rhythmus in und/oder quer zur Ebene des Bedienfelds bewegbar antreibbar sein, wobei eine gute haptische Erfassbarkeit gegeben ist, wenn die Aufnahme mit der darin aufgenommenen Bedieneinheit in dem alternierenden Rhythmus mit Beschleunigungen zwischen 5 g und 10 g bewegbar antreibbar ist.

Es versteht sich, dass dies ein bevorzugter Bereich ist. Die Beschleunigung kann auch höher oder niedriger sein.

Eine weitgehend direkte und damit gute Übertragung des Bewegungsantriebs auf die Bedieneinheit wird dadurch erreicht, dass die Aufnahme schalenartig mit einem Boden ausgebildet und der Aktor oder die Aktoren auf der der Bedieneinheit abgewandten Seite des Bodens in der Aufnahme angeordnet sind.

Zur kompakten und geringen Bauraum erfordernden Ausbildung führt es, wenn auf der der Bedieneinheit abgewandten Seite des Bodens der Aufnahme eine Aktorelektronik zur Ansteuerung des Aktors oder der Aktoren angeordnet ist.

Außer dem Austausch von Informationen zwischen PDA oder Smartphone und der Bordelektronik können in Doppelfunktion auch von der Bedieneinheit über die Schnittstelle Informationen über das jeweilig betätigte Bedienelement einem Haptik- und Effekttreiber zuleitbar sein, durch den entsprechende Haptikinformationen dem Aktor oder den Aktoren oder der Aktorelektronik zur Ansteuerung des Aktors oder der Aktoren zuleitbar sein, so dass dazu keine zweite Schnittstelle erforderlich sind.

In einem Effektspeicher können den Bedienelementen jeweils zugeordnete Effektdaten gespeichert und von dem Haptik- und Effekttreiber abrufbar sein.

Weiterhin ist vorzugsweise die Software zum Betreiben von dem Aktor oder den Aktoren und/oder der Aktorelektronik und/oder des Haptik- und Effektreibers und/oder zur Übertragung der Effektdaten zum Effektspeicher von der Bedieneinheit über die Schnittstelle der Bordelektronik und/oder dem Haptik- und Effektreiber und/oder der Aktorelektronik und/oder dem Effektspeicher zuleitbar.

Ist das Bedienfeld der Bedieneinheit ein Touchscreen mit einem Anzeigefeld und mit Bedienelemente bildenden Tastfeldern, so ist die haptische Erfassung der Bedienelemente von besonderem Vorteil, da Touchscreens quasi ohne Berührungskräfte nur mit z. B. kapazitiven Touchsensoren Bewegungen erfassen, was eine kontrollierte Bewegung und Handnavigation ohne visuelle Beobachtung erschweren oder unmöglich machen würde.

Ein Ausführungsbeispiel der Erfindung ist in der Zeichnung dargestellt und wird im Folgenden näher beschrieben. Es zeigen:

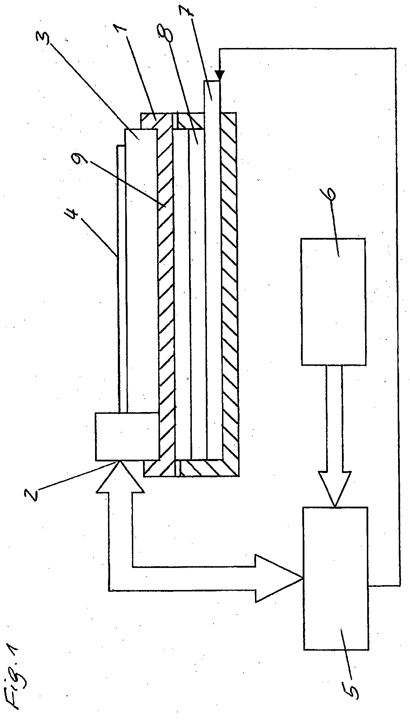

- Figur 1: eine Prinzipdarstellung einer Bedieneinrichtung für eine Bordelektronik eines Kraftfahrzeugs,

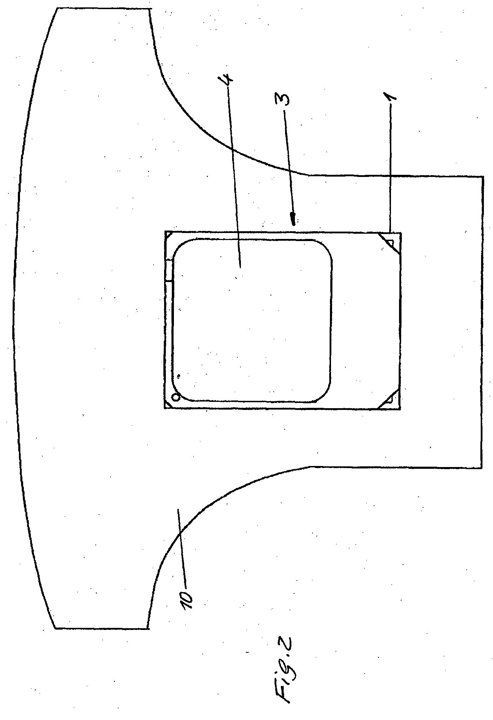

- Figur 2: eine Ansicht eines Ausschnitts eines Armaturenbretts mit einer Bedieneinrichtung nach Figur 1.

Die dargestellte Bedieneinrichtung weist eine schalenartige Aufnahme 1 einer Dockingstation auf, die an der Mittelkonsole oder am Armaturenbrett im Innenraum eines Kraftfahrzeugs fest angeordnet ist.

Die Aufnahme 1 besitzt eine Schnittstelle 2 zur Datenaustauschverbindung der Elektronik eines in die Aufnahme 1 mechanisch steif eingesetzten Smartphones mit der Bordelektronik des Kraftfahrzeugs.

Das Smartphone 3 besitzt ein als Touchscreen 4 ausgebildetes Bedienfeld mit Bedienelemente bildenden Tastfeldern, denen jeweils kapazitive Touchsensoren zugeordnet sind.

Über die Schnittstelle 2 sind weiterhin im Smartphone 3 gespeicherte Informationen über die Tastfelder des Touchscreens 4 einem Haptik- und Effekttreiber 5 zuleitbar.

In einem Effektspeicher 6 sind Effektdaten gespeichert, die von dem Haptik- und Effekttreiber 5 abrufbar sind.

Je nach dem Tastfeld, dem sich eine Betätigungshand einer Bedienperson nähert und/oder von dieser betätigt wird, erhält der Haptik- und Effekttreiber 5 entsprechend eine Information vom Smartphone 3 zugeleitet, ruft die dazu gehörenden Effektdaten vom Effektspeicher 6 ab und bereitet entsprechende Haptikinformationen auf.

Diese einem bestimmten Tastfeld zugeordneten Haptikinformationen werden einer Aktorelektronik 7 zugeleitet, die einen Aktor 8 ansteuert.

Der unter einem Boden 9 der Aufnahme 1 und über der Aktorelektronik 7 angeordnete Aktor 8 treibt dann die Aufnahme 1 zu einem alternierenden rhythmischen für das betätigte Tastfeld individuellen Bewegungsmuster mit Beschleunigungen der Aufnahme 1 von etwa 7 g an. Dies wird dann von der Bedienperson mit der Betätigungshand haptisch als dem betätigten Tastfeld zugeordnet erfasst.

Auf diese Weise ist zur Bedienung des Smartphones 3 keine Beobachtung des Touchscreens 4, sondern nur ein haptisches Erfassen der Position auf dem Touchscreen 4 anhand der individuellen Bewegungsmuster des fest in die Aufnahme 1 eingesetzten Smartphones 3 erforderlich.

Als Aktoren können jede Art rhythmische Bewegungsmuster erzeugende Aktoren Verwendung finden. Eine geeignete Art von Aktoren ist in der DE 10 2010 007 486 beschrieben.

## Patentansprüche

1. Bedieneinrichtung für eine Bordelektronik eines Kraftfahrzeugs, mit einer Bedieneinheit und einer Aufnahme, wobei die Bedieneinheit in der Aufnahme (1) einer im Innenraum des Kraftfahrzeugs befindlichen, an einer Mittelkonsole öder an einem Armaturenbrett des Kraftfahrzeugs fest angeordneten Dockingstation anordnenbar ist, und mit einer Schnittstelle (2) zwischen der Bedieneinrichtung (3) und der Dockingstation zum Datenaustausch von Informationen, wobei die Bedieneinheit (3) ein mehrere manuell betätigbare Bedienelemente aufweisendes Bedienfeld besitzt und wobei die Aufnahme (1) mit der darin aufgenommenen Bedieneinheit (3) bei Betätigung eines der Bedienelemente durch einen oder mehrere Aktoren (8) in einem dem jeweils betätigten Bedienelement zugeordneten alternierenden Rhythmus bewegbar antreibbar ist.

2. Bedieneinrichtung nach Anspruch 1, **dadurch g e - kennzeichnet,** dass die Bedieneinheit in mechanisch steifer Verbindung mit der Aufnahme (1) in der Aufnahme (1) anordnenbar ist.

3. Bedieneinrichtung nach einem der vorhergehenden Ansprüche, **dadurch gekennzeichnet, dass** die Aufnahme (1) mit der darin aufgenommenen Bedieneinheit in dem alternierenden Rhythmus in und/oder quer zur Ebene des Bedienfelds bewegbar antreibbar ist.

4. Bedieneinrichtung nach Anspruch 3, **dadurch g e - kennzeichnet,** dass die Aufnahme (1) mit der darin aufgenommenen Bedieneinheit in dem alternierenden Rhythmus mit Beschleunigungen zwischen 5 g und 10 g bewegbar antreibbar ist.

5. Bedieneinrichtung nach einem der vorhergehenden Ansprüche, **dadurch gekennzeichnet, dass** die Aufnahme (1) schalenartig mit einem Boden (9) ausgebildet und der Aktor (8) oder die Aktoren (8) auf der der Bedieneinheit abgewandten Seite des Bodens (9) in der Aufnahme (1) angeordnet sind.

6. Bedieneinrichtung nach Anspruch 5, **dadurch g e - kennzeichnet,** dass auf der der Bedieneinheit abgewandten Seite des Bodens (9) der Aufnahme (1) eine Aktorelektronik (7) zur Ansteuerung des Aktors (8) oder der Aktoren (8) angeordnet ist.

7. Bedieneinrichtung nach einem der vorhergehenden Ansprüche, **dadurch gekennzeichnet, dass** von der Bedieneinheit über die Schnittstelle (2) Informationen über das jeweilig betätigte Bedienelement einem Haptik- und Effekttreiber (5) zuleitbar sind, durch den entsprechende Haptikinformationen dem Aktor (8) oder den Aktoren (8) oder der Aktorelektronik (7) zur Ansteuerung des Aktors (8) oder der Aktoren (8) zuleitbar sind.

8. Bedieneinrichtung nach Anspruch 7, **dadurch g e - kennzeichnet,** dass in einem Effektspeicher (6) den Bedienelementen jeweils zugeordnete Effektdaten gespeichert und von dem Haptik- und Effekttreiber (5) abrufbar sind.

9. Bedieneinrichtung nach einem der vorhergehenden Ansprüche, **dadurch gekennzeichnet, dass** die Software zum Betreiben des Aktors (8) oder der Aktoren (8) und/oder der Aktorelektronik (7) und/oder des Haptik- und Effektreibers (5) und/oder zur Übertragung der Effektdaten zum Effektspeicher (6) von der Bedieneinheit über die Schnittstelle (2) der Bordelektronik und/oder dem Haptik- und Effektreiber (5) und/oder der Aktorelektronik (7) und/oder dem Effektspeicher (6) zuleitbar ist.

10. Bedieneinrichtung nach einem der vorhergehenden Ansprüche, **dadurch gekennzeichnet, dass** das Bedienfeld der Bedieneinheit ein Touchscreen (4) mit einem Anzeigefeld und mit die Bedienelemente bildenden Tastfeldern ist.

## Claims

1. Operator control device for onboard electronics in a motor vehicle, having an operator control unit and a slot, wherein the operator control unit can be arranged in the slot (1) in a docking station that is situated in the interior of the motor vehicle and that is firmly arranged on a center console or on a dashboard of the motor vehicle, and having an interface (2) between the operator control unit (3) and the docking station for the data interchange of information, wherein the operator control unit (3) has an operator control panel having a plurality of manually operable operator control elements and wherein when one of the operator control elements is operated the slot (1) with the operator control unit (3) held therein can be driven moveably by one or more actuators (8) in an alternating rhythm associated with the respectively operated operator control element.

2. Operator control device according to Claim 1, **characterized in that** the operator control unit can be arranged in the slot (1) in a mechanically rigid connection to the slot (1).

3. Operator control device according to either of the preceding claims, **characterized in that** the slot (1) with the operator control unit held therein can be driven moveably in the alternating rhythm in and/or transversely with respect to the plane of the operator control panel.

4. Operator control device according to Claim 3, **characterized in that** the slot (1) with the operator control unit held therein can be driven moveably in the alternating rhythm at accelerations between 5 g and 10 g.

5. Operator control device according to one of the preceding claims, **characterized in that** the slot (1) is formed in the manner of a tray with a base (9), and the actuator (8) or the actuators (8) is/are arranged in the slot (1) on that side of the base (9) that is remote from the operator control unit.

6. Operator control device according to Claim 5, **characterized in that** that side of the base (9) of the slot (1) that is remote from the operator control unit holds actuator electronics (7) for controlling the actuator (8) or the actuators (8).

7. Operator control device according to one of the preceding claims, **characterized in that** the operator control unit can use the interface (2) to supply information about the respectively operated operator control element to a haptic and effect driver (5), which can supply appropriate haptic information to the actuator (8) or to the actuators (8) or the actuator electronics (7) in order to control the actuator (8) or the actuators (8).

8. Operator control device according to Claim 7, **characterized in that** an effect memory (6) stores effect data that are respectively associated with the operator control elements, which effect data can be retrieved by the haptic and effect driver (5).

9. Operator control device according to one of the preceding claims, **characterized in that** the software for operating the actuator (8) or the actuators (8) and/or the actuator electronics (7) and/or the haptic and effect driver (5) and/or for transmitting the effect data to the effect memory (6) can be supplied to the onboard electronics and/or to the haptic and effect driver (5) and/or to the actuator electronics (7) and/or to the effect memory (6) by the operator control unit via the interface (2).

10. Operator control device according to one of the preceding claims, **characterized in that** the operator control panel of the operator control unit is a touchscreen (4) having a display panel and having touch panels that form the operator control elements.

## Revendications

1. Dispositif de commande d'une électronique de bord d'un véhicule automobile comprenant une unité de commande et un logement, l'unité de commande pouvant être mise dans le logement (1) d'une station d'accueil, se trouvant à l'intérieur du véhicule automobile et montée fixe sur une console au plancher ou sur un tableau de bord du véhicule automobile ou pouvant l'être, et comprenant une interface (2) entre l'unité (3) de commande et le poste d'accueil pour l'échange de données d'informations, l'unité (3) de commande ayant un panneau de commande ayant plusieurs éléments de commande pouvant être actionnés manuellement et dans lequel le logement (1) peut, avec l'unité (3) de commande qui y est logée, lors de l'actionnement de l'un des éléments de commande, être entraîné avec possibilité de déplacement par un ou par plusieurs actionneurs (3) suivant un rythme en alternance associé à l'élément de commande actionné respectivement.

2. Dispositif de commande suivant la revendication 1, **caractérisé en ce que** l'unité de commande peut être mise dans le logement (1) suivant une liaison rigide mécaniquement avec le logement (1).

3. Dispositif de commande suivant l'une des revendications précédentes, **caractérisé en ce que** le logement (1) peut, avec l'unité de commande qui y est logée, être entraîné avec possibilité de déplacement suivant le rythme en alternance, dans le plan du panneau de commande et/ou transversalement à celui-ci.

4. Dispositif de commande suivant la revendication 3, **caractérisé en ce que** le logement (1) peut, avec l'unité de commande qui y est logée, être entraîné avec possibilité de déplacement suivant le rythme en alternance à des accélérations comprises entre 5 g et 10 g.

5. Dispositif de commande suivant l'une des revendications précédentes, **caractérisé en ce que** le logement (1) est constitué en étant de type en coquille, ayant un fond (9), et l'actionneur (8) ou les actionneurs (8) sont mis dans le logement (1) du côté, éloigné de l'unité de commande, du fond (9).

6. Dispositif de commande suivant la revendication 5, **caractérisé en ce que**, du côté, éloigné de l'unité de commande, du fond (9) du logement (1) est disposée une électronique (7) d'actionneur pour exciter l'actionneur (8) ou les actionneurs (8).

7. Dispositif de commande suivant l'une des revendications précédentes, **caractérisé en ce que**, par l'unité de commande et par l'intermédiaire de l'interface (2), des informations sur l'élément de commande actionné respectivement peuvent être envoyées à un excitateur (5) haptique et d'effet, par lequel des informations haptiques correspondantes peuvent être envoyées à l'actionneur (8) ou aux actionneurs (8) ou à l'électronique (7) d'actionneur pour exciter l'actionneur (8) ou les actionneurs (8).

8. Dispositif de commande suivant la revendication 7, **caractérisé en ce que** des données d'effet associées respectivement aux éléments de commande sont mémorisées dans une mémoire d'effet et peuvent être appelées par l'excitateur (5) haptique et d'effet.

9. Dispositif de commande suivant l'une des revendications précédentes, **caractérisé en ce que** le logiciel pour faire fonctionner l'actionneur (8) ou les actionneurs (8) et/ou l'électronique (7) d'actionneur et/ou l'excitateur (5) haptique et d'effet et/ou pour la transmission des données d'effet à la mémoire (6) d'effet par l'unité de commande par l'intermédiaire de l'interface (2) peut être envoyé à l'électronique de bord et/ou à l'excitateur (5) haptique et d'effet et/ou à l'électronique (7) d'actionneur et/ou à la mémoire (6) d'effet.

10. Dispositif de commande suivant l'une des revendications précédentes, **caractérisé en ce que** le panneau de commande de l'unité de commande est un écran (4) tactile ayant une console de visualisation et des touches formant les éléments de commande.
